# FASCICULE DE BREVET EUROPEEN

(11) **EP 4 330 635 B1**
(45) Date de publication et mention de la délivrance du brevet: **11.03.2026**
(21) Numéro de dépôt: 22725729.2
(22) Date de dépôt: 25.04.2022
(51) Int. Cl.: G01C 23/00, G09G 3/00, G09G 5/00, G06F 11/07, G06F 21/50, G06F 11/32, G06F 21/84

(54) **SYSTEME D'AFFICHAGE D'INFORMATIONS CRITIQUES ET NON CRITIQUES**
SYSTEM ZUR ANZEIGE KRITISCHER UND NICHTKRITISCHER INFORMATIONEN
SYSTEM FOR DISPLAYING CRITICAL AND NON-CRITICAL INFORMATION

(30) Priorité: 30.04.2021 FR 2104581
(43) Date de publication de la demande: 06.03.2024
(73) Titulaire: Safran Electronics & Defense, 75015 Paris (FR)
(72) Inventeur: BONNET, Julien, 77550 MOISSY-CRAMAYEL (FR); MONTOYA, Michael, 77550 MOISSY-CRAMAYEL (FR); CHARRIER, Nicolas, 77550 MOISSY-CRAMAYEL (FR)
(74) Mandataire: Cabinet Boettcher
(86) Numéro de dépôt international: PCT/EP2022/060921
(87) Numéro de publication internationale: WO 2022/229113

(56) Documents cités:
- EP-A1- 3 495 778
- WO-A1-2011/066920
- US-A1- 2015 109 340

## Description

### ARRIERE PLAN DE L'INVENTION

La présente invention concerne le domaine de l'affichage d'informations critiques et non critiques pour le pilotage d'un véhicule et plus particulièrement d'un aéronef.

Dans le domaine avionique, les informations critiques sont les informations dont la connaissance est indispensable pour le pilotage de l'aéronef et qui, si elles sont erronées, peuvent directement conduire à la perte de l'aéronef. Les principales informations critiques comprennent par exemple la vitesse air, un indicateur de dérapage, un indicateur d'attitude, l'altitude, la vitesse verticale, et le cap. Pour cette raison, le dispositif d'affichage des données critiques est lui-même un élément critique dont l'utilisation à bord d'un aéronef est précédée d'une procédure de qualification, ou certification, comportant des tests poussés visant à démontrer la robustesse, la précision et la fiabilité du dispositif d'affichage en toute circonstance. La conception et la fabrication d'un tel dispositif d'affichage sont pour ces raisons coûteuses.

Pour apporter plus de confort à l'équipage, il est connu d'afficher dans le cockpit des informations qui sont utiles sans toutefois être critiques. Ces informations comprennent par exemple les températures intérieure et extérieure, des données horaires, des données se rapportant au fonctionnement d'équipements de l'aéronef, des données de navigation et autres informations de ce type. Le dispositif d'affichage de ces informations peut être un dispositif d'affichage lui-même non critique ou bien le dispositif d'affichage critique.

Dans les systèmes les plus élaborés, il est prévu d'afficher également des informations non critiques relativement complexes. Selon un premier exemple, il s'agit d'informations cartographiques, plus particulièrement des images dites de rendu terrain représentant en trois dimensions la zone de la surface terrestre survolée par l'aéronef. Selon un deuxième exemple, il s'agit d'images provenant de caméras embarquées.

Pour l'affichage de telles informations complexes, on utilise un processeur central (CPU) pour traiter les informations critiques en vue de l'affichage, un processeur graphique (GPU) pour la construction des images incorporant les informations non critiques et la représentation graphique des informations critiques (caractères alphanumériques, symboles, courbe, histogramme, échelle), et un circuit de type FPGA pour transformer ces images en signaux électriques permettant l'affichage des images par un écran. A titre d'exemple, classiquement, le processeur central calcule qu'il faut tracer une droite d'un point A (0, 0) à un point B (100, 100) et le processeur graphique élabore une image dans laquelle sont allumés tous les pixels (i, j) pour lesquels i = j variant de 0 à 100.

Le document WO-A-2011/066920 décrit un dispositif d'affichage permettant d'élaborer des images comprenant à la fois des informations critiques et des informations non critiques. Le document EP-A-3495778 décrit un procédé pour afficher des informations critiques sur un afficheur non certifié. Le document US-A-2015/109340 décrit un procédé pour afficher des images comprenant des informations critiques en premier plan et des informations non critiques en arrière-plan.

### OBJET DE L'INVENTION

L'invention a notamment pour but de pouvoir assurer que les informations critiques affichées n'ont pas été altérées au cours de leur traitement en vue de leur affichage.

### RESUME DE L'INVENTION

A cet effet, on prévoit, selon l'invention un système d'affichage d'informations critiques et non critiques sur un écran, le système comprenant, dans un même boîtier, au moins un circuit électronique de calcul (110) et un circuit électronique de surveillance. Le circuit électronique de calcul est programmé pour traiter les informations critiques à afficher, construire au moins une image à partir des informations non critiques et y incorporer les informations critiques à afficher afin de former, sur une sortie du circuit électronique de calcul, un signal image destiné à être transmis à l'écran. Le circuit électronique de surveillance a une entrée reliée à ladite sortie et est programmé pour déterminer des informations critiques attendues pour l'affichage et vérifier si le signal image contient des informations correspondant aux informations critiques attendues.

Ainsi, la présence des informations critiques est vérifiée dans le signal image destiné à être transmis à l'écran d'affichage, ce qui limite les risques d'affichage d'informations critiques altérées par le traitement qu'elles ont subi en vue de leur affichage. Le fait que les données à afficher soient traitées en vue de leur affichage par des circuits électroniques disposés dans un seul et même boîtier facilite cette vérification.

L'invention a également pour objet un aéronef équipé d'un écran d'affichage relié à la sortie du circuit électronique de commande d'un tel système.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
La figure 1 est une vue schématique partielle de dessus d'un aéronef selon l'invention ;
La figure 2 est un schéma-bloc d'un système d'affichage selon un premier mode de réalisation de l'invention ;
La figure 3 est un schéma-bloc d'un système d'affichage selon un deuxième mode de réalisation de l'invention ;
La figure 4 est un schéma-bloc d'un système d'affichage selon un troisième mode de réalisation de l'invention.

### DESCRIPTION DETAILLEE DE L'INVENTION

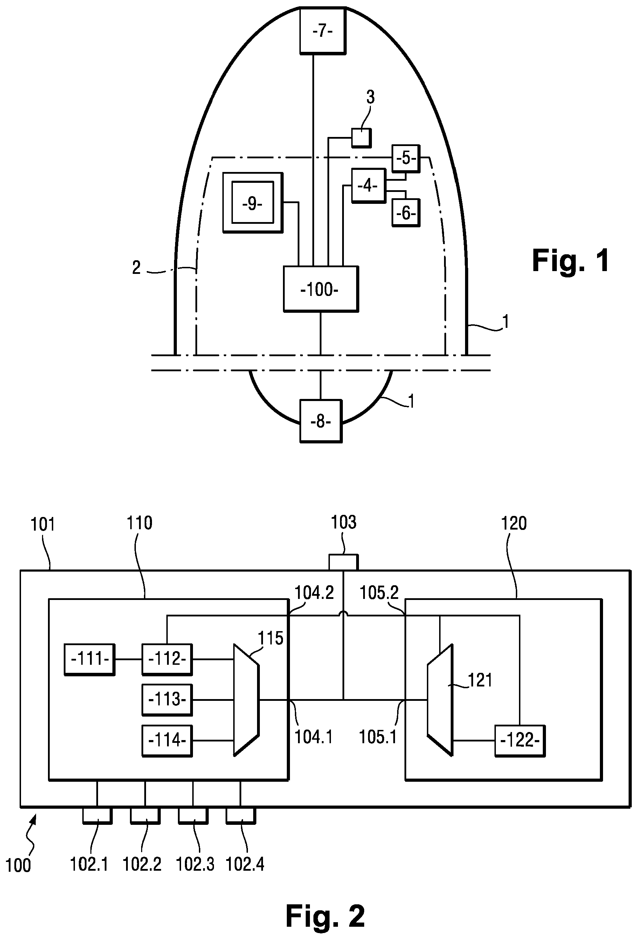

En référence à la figure 1, l'aéronef, ici un avion, comporte un fuselage 1 dans lequel est aménagé un cockpit 2.

L'aéronef est pourvu d'un certain nombre d'équipements fournissant des informations au pilote pour lui permettre de piloter l'aéronef et de l'amener sans encombre de son point de départ à son point d'arrivée. Parmi ces informations, se trouvent :
- des informations critiques permettant au pilote de faire décoller et atterrir l'aéronef, et de le maintenir en vol ; et
- des informations non critiques permettant par exemple au pilote de visualiser son environnement.

Ainsi, de manière connue en elle-même, l'aéronef est pourvu d'un ensemble de capteurs extérieurs 3 comprenant :
- un altimètre barométrique 3 qui fournit, en association avec un capteur de température extérieure, une mesure d'altitude à partir de la pression atmosphérique environnant l'aéronef ;
- des sondes Pitot pour mesurer la vitesse air de l'aéronef.

L'altitude et la vitesse air de l'aéronef font partie des informations critiques à afficher.

L'aéronef embarque également une centrale électronique de navigation 4 reliée, d'une part, à une centrale inertielle 5 comportant des capteurs inertiels linéaires (accéléromètres) et des capteurs inertiels angulaires (gyroscopes ou gyromètres) pour fournir des données inertielles de positionnement (attitude, position et vitesse) et, d'autre part, à un récepteur 6 de signaux satellitaires agencé pour fournir des données satellitaires de positionnement de l'aéronef (pseudo-distances) à partir des signaux provenant d'une constellation de satellites appartenant à un système de positionnement par satellites (ou GNSS ; comme les systèmes GPS, GALILEO, GLONASS, BEIDOU...). La centrale électronique de navigation 4, connue en elle-même, détermine par hybridation des données inertielles et satellitaires de positionnement, une vitesse de l'aéronef ainsi qu'une position de l'aéronef reportée sur une carte de la zone survolée. On ne s'intéresse ici qu'à l'attitude, fournie par la centrale inertielle 5, qui fait partie des informations critiques à afficher.

Une caméra frontale 7 est montée à l'avant du fuselage 1 pour fournir, sous la forme d'un flux vidéo, des images de l'environnement à l'avant de l'aéronef. Ces images font partie des informations non critiques à afficher.

Une caméra arrière 8 est montée à l'arrière du fuselage 1 pour fournir, sous la forme d'un flux vidéo, des images de l'environnement à l'arrière de l'aéronef. Ces images font partie des informations non critiques à afficher.

Un écran d'affichage 9 relié à un système d'affichage généralement désigné en 100 est monté dans le cockpit 2 pour présenter au pilote les informations critiques et les informations non critiques. Bien entendu, le nombre d'informations à afficher pourrait être différent avec plus ou moins d'informations critiques et/ou plus ou moins d'informations non critiques : il s'agit là d'un exemple pour expliquer simplement l'invention.

Le système d'affichage 100 comprend un boîtier 101 pourvu de connecteurs définissant respectivement au moins une première entrée 102.1 reliée à l'altimètre barométrique 3 pour recevoir l'altitude, une deuxième entrée 102.2 reliée à la centrale électronique de navigation 4 pour recevoir la vitesse, une troisième entrée 102.3 reliée à la caméra frontale 7 pour recevoir un flux vidéo représentant l'environnement avant de l'aéronef, une quatrième entrée 102.4 reliée à la caméra arrière 8 pour recevoir un flux vidéo représentant l'environnement arrière de l'aéronef, et une sortie 103 pour fournir le signal électrique correspondant aux images à afficher. Les connecteurs formant les entrées 102.1 à 102.4 et la sortie 103 permettent le raccordement électrique du système d'affichage 100 aux équipements auxquels il est destiné à être relié.

Le boîtier 101 renferme au moins un circuit électronique de calcul 110 (couramment appelé COM) et un circuit électronique de surveillance 120 (couramment appelé MON) relié au circuit électronique de calcul 110. Chacun de ces circuits électroniques 110, 120 comprend au moins un processeur et un ensemble mémoire contenant des programmes informatiques exécutables par le processeur.

Les programmes informatiques exécutés par le processeur du circuit électronique de calcul 110 comprennent des instructions agencées pour que le circuit électronique de calcul 110 forme une unité de traitement central (couramment appelée CPU) qui traite (prépare et met en forme) des informations critiques à afficher, construise une image à partir des informations non critiques et y incorpore les informations critiques traitées, afin de former, sur une sortie du circuit électronique de calcul 110, un signal image destiné à être transmis à l'écran d'affichage 8.

Les programmes informatiques exécutés par le processeur du circuit électronique de surveillance 120 comprennent des instructions agencées pour que le circuit électronique de surveillance 120 détermine des informations critiques attendues pour l'affichage et détermine si le signal image contient des informations correspondant aux informations critiques attendues.

Les différentes fonctions et tâches assurées par le circuit électronique de calcul 110 et par le circuit électronique de surveillance 120 vont maintenant être décrites, en relation aux figures 2 à 4, dans trois modes de réalisation.

Le circuit électronique de calcul 110 assure les mêmes fonctions et tâches dans les trois modes de réalisation. Le circuit électronique de calcul 110 reçoit l'altitude et la vitesse de l'aéronef, qui sont les informations critiques, depuis les entrées 102.1, 102.2. Le programme exécuté par le circuit électronique de calcul 110 comprend une partie de programme 111 agencée pour regrouper les informations critiques et les mettre sous la forme sous laquelle elles seront affichées pour obtenir ainsi les informations critiques à afficher.

Une partie de programme 112 exécutée par le circuit électronique de calcul 110 incorpore ensuite les informations critiques à afficher dans une couche de détail (communément appelée « layer ») dite α qui comprend un fond transparent et est destinée à former une couche de surimpression dans les images à afficher.

Le circuit électronique de calcul 110 reçoit le flux vidéo de la caméra frontale 7 par l'entrée 102.3 et le flux vidéo de la caméra arrière 8 par l'entrée 102.4. Le programme exécuté par le circuit électronique de calcul 110 comprend des parties de programmes 113, 114 agencées pour afficher les deux flux vidéo dans deux fenêtres d'une couche de détail d'arrière-plan de l'image (appelée classiquement couche RGB).

Une partie de programme 115 fusionne ensuite la couche de détail d'arrière-plan avec la couche de détail α de telle manière que cette dernière apparaisse en surimpression sur la couche de détail d'arrière-plan. Le circuit électronique de calcul 110 fournit un signal image (plus précisément un flux vidéo) par une sortie 104.1 reliée à la sortie 103 à laquelle l'écran 9 est connectée.

En pratique, le circuit électronique de calcul 110 peut être programmé pour émuler le fonctionnement d'un processeur de traitement graphique (couramment nommé GPU). Le programme d'émulation prend alors en charge la réalisation des couches de détails et leur fusion. De tels programmes d'émulation sont présentement disponibles sur le marché et peuvent être configurés et utilisés pour réaliser l'invention.

Le circuit électronique de calcul 110 peut alternativement être programmé pour utiliser des images pré-calculées.

En variante, Le circuit électronique de calcul 110 peut comprendre au moins un circuit FPGA formant un accélérateur vidéo agencé pour fusionner les couches de détails entre elles. Le circuit FPGA est alors de préférence programmé pour assurer au moins une partie des fonctions de traitement traditionnellement assurées par un GPU. Les calculateurs de vol des aéronefs contiennent des circuits FPGA qui peuvent être utilisés à cette fin.

Dans les trois modes de réalisation également, la sortie 104.1 du circuit électronique de calcul 110 est reliée à une entrée 105.1 du circuit électronique de surveillance 120 permettant au circuit électronique de calcul 110 de transmettre le signal image au circuit électronique de surveillance 120.

Selon le premier mode de réalisation illustrée sur la figure 2, le circuit électronique de calcul 110 comprend une sortie 104.2 reliée à une entrée 105.2 du circuit électronique de surveillance 120 permettant au circuit électronique de calcul 110 de transmettre la couche de détail α au circuit électronique de surveillance 120. La couche de détail α comprend les informations critiques considérées comme attendues par l'unité électronique de surveillance 120.

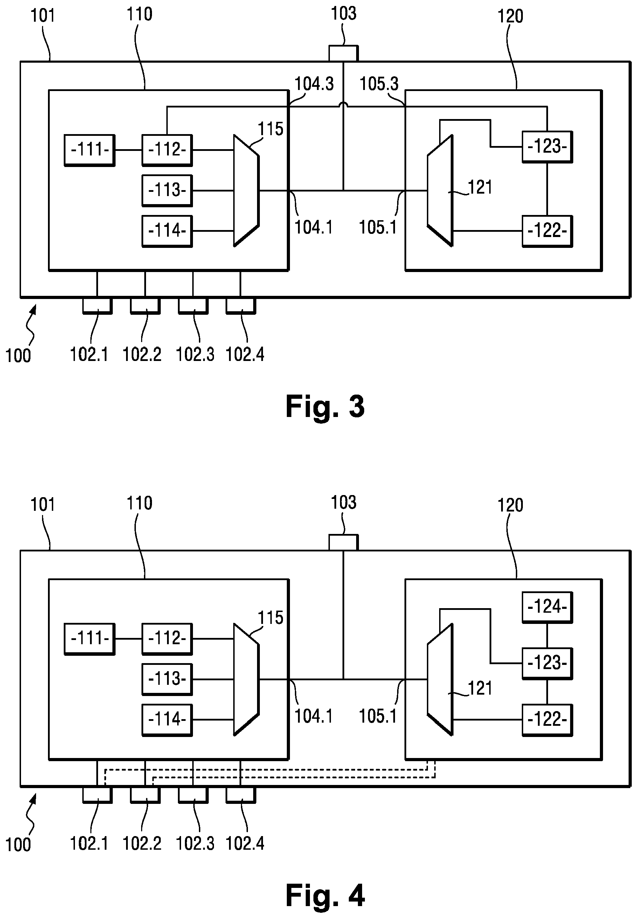

L'unité électronique de surveillance 120 exécute un programme dont une partie 121 est agencée pour utiliser la couche de détail α reçue comme un masque et l'appliquer au signal image reçu sur l'entrée 105.1 pour obtenir un signal résultat. Une partie de programme 122 exécutée par le circuit électronique de surveillance 120 vérifie à partir du signal résultat que la couche de détail α reçue par l'entrée 105.2 se retrouve bien dans le signal image reçu sur l'entrée 105.1. En effet, le signal résultat doit correspondre à la couche de détail α reçue par l'entrée 105.2, les autres informations étant masquées. Dans l'affirmative, les informations critiques sont correctement affichées. Dans la négative, les informations critiques ont été altérées soit lors de la fusion, soit lors du transfert entre l'unité de calcul 110 et l'unité de surveillance 120, soit il s'agit d'une défaillance de l'unité de surveillance 120 : l'unité électronique de surveillance 120 émet une alerte informant le pilote qu'il ne peut tenir compte des informations critiques affichées. Selon le deuxième mode de réalisation illustrée sur la figure 3, le circuit électronique de calcul 110 comprend une sortie 104.3 reliée à une entrée 105.3 du circuit électronique de surveillance 120 permettant au circuit électronique de calcul 110 de transmettre, au circuit électronique de surveillance 120, les informations critiques traitées qui seront considérées comme étant les informations critiques attendues par le circuit électronique de surveillance 120.

Le programme exécuté par l'unité électronique de surveillance 120 comprend une partie de programme 123 agencée pour créer la couche de détail α incorporant les informations critiques traitées reçues par l'entrée 105.2 et la transmettre à la partie de programme 121 qui va l'utiliser comme masque appliqué au signal image reçu sur l'entrée 105.1 pour obtenir un signal résultat. Le signal résultat correspond à l'image résultant du filtrage de l'image reçue sur l'entrée 105.1 en utilisant la couche α comme masque. La partie de programme 122 exécutée par le circuit électronique de surveillance 120 vérifie à partir du signal résultat que la couche de détail α créée par l'unité électronique de surveillance 120 se retrouve bien dans le signal image reçu sur l'entrée 105.1. En effet, le signal résultat doit correspondre à la couche de détail α créée par l'unité électronique de surveillance 120, les autres informations étant masquées. Dans l'affirmative, les informations critiques sont correctement affichées. Dans la négative, les informations critiques ont été altérées, soit lors de la création de la couche de détail α par l'unité électronique de calcul 110, soit lors de la fusion, soit lors du transfert entre l'unité de calcul 110 et l'unité de surveillance 120, soit il s'agit d'une défaillance de l'unité de surveillance 120 : l'unité électronique de surveillance 120 émet une alerte informant le pilote qu'il ne peut tenir compte des informations critiques affichées.

Selon le troisième mode de réalisation illustrée sur la figure 4, le circuit électronique de surveillance 120 est relié aux entrées 102.1, 102.2 pour recevoir directement les informations critiques.

Le programme exécuté par l'unité électronique de surveillance 120 comprend une partie de programme 124 agencée pour traiter, comme la partie de programme 111, les informations critiques à partir de celles reçues directement depuis les entrées 102.1, 102.2 et obtenir ainsi les informations critiques attendues. Les informations critiques ainsi traitées sont théoriquement identiques à celles produites par le circuit électronique de calcul 110 et sont transmises à la partie de programme 123 qui crée la couche de détail α incorporant les informations critiques traitées par la partie de programme 124. La couche de détail α créée par la partie de programme 123 est transmise à la partie de programme 121 qui l'utilise comme masque appliqué au signal image reçu sur l'entrée 105.1 pour obtenir un signal résultat. La partie de programme 122 exécutée par le circuit électronique de surveillance 120 vérifie à partir du signal résultat que la couche de détail α créée par l'unité électronique de surveillance 120 se retrouve bien dans le signal image reçu sur l'entrée 105.1. En effet, l'image résultat doit correspondre à la couche de détail α créée par l'unité électronique de surveillance 120, les autres informations étant masquées. Dans l'affirmative, les informations critiques sont correctement affichées. Dans la négative, les informations critiques ont été altérées, soit lors de l'élaboration par l'unité électronique de calcul 110, soit lors de la création de la couche de détail α par l'unité électronique de calcul 110 soit lors de la fusion, soit lors du transfert entre l'unité de calcul 110 et l'unité de surveillance 120, soit il s'agit d'une défaillance de l'unité de surveillance 120 : l'unité électronique de surveillance 120 émet une alerte informant le pilote qu'il ne peut tenir compte des informations critiques affichées. Bien entendu, l'invention n'est pas limitée au mode de réalisation décrit mais englobe toute variante entrant dans le champ de l'invention telle que définie par les revendications.

En particulier, le système peut avoir une structure différente de celle décrite et par exemple plusieurs unités de calcul et/ou de surveillance. L'unité de surveillance peut comprendre au moins un voteur (sélectionneur autonome de l'unité de calcul fournissant une image avec des informations critiques considérées correctes) ou au moins un relais (piloté par un autre équipement ou un humain). Par exemple le circuit électronique de calcul 110 et le circuit électronique de surveillance 120 peuvent appartenir à un même circuit électronique. Ils peuvent être formés chacun par un ou plusieurs cœurs d'un même processeur. Les circuits électroniques 110 et 120 peuvent faire partie du même calculateur de vol.

En variante, les entrées 102 peuvent être regroupées dans un boîtier séparé (module d'interface) relié par un câble de raccordement électrique au boîtier 101 qui contient les circuits de calcul et surveillance.

L'invention peut être mise en œuvre en utilisant un ou plusieurs processeurs à un ou plusieurs cœurs et/ou un ou plusieurs circuits FPGA incorporant un ou plusieurs processeurs.

Les informations critiques et non critiques peuvent être fournies par d'autres moyens que ceux décrits, par exemple un altimètre radio pour l'altitude.

Les informations critiques peuvent comprendre d'autre informations que celles mentionnées.

Les informations non critiques peuvent comprendre des paramètres de fonctionnement de l'aéronef, des données météorologiques, des images dans le domaine visible ou infrarouge, des données radar...

Les informations non critiques peuvent en outre comprendre des images de suivi de terrain. L'aéronef comprend alors :
- une base de données d'altitudes contenant les coordonnées des points d'un maillage du territoire survolé par l'avion et les altitudes associées à chaque point de ce maillage,
- une base de données photographiques contenant les coordonnées des points de ce même maillage du territoire survolé par l'avion et des photographies aériennes associées à ces points.

En variante, le circuit électronique de calcul 110 a au moins une entrée reliée à une source de mesures et le circuit électronique de surveillance 120 a une entrée reliée à ladite source de mesures, les informations critiques à afficher et les informations critiques attendues étant donc obtenues à partir de la même source de mesures. Le circuit électronique de calcul 110 incorpore les informations critiques à afficher dans une première couche de détail fusionnée avec au moins une couche de détail d'arrière-plan pour former l'image à afficher, la première couche de détail étant également transmise au circuit électronique de surveillance 120.

L'invention est applicable à tout type d'aéronef, à voilure fixe ou tournante, piloté ou non, atmosphérique ou spatial... L'invention est également applicable à des véhicules navals ou terrestres.

## Revendications

1. Système d'affichage d'informations critiques et non critiques sur un écran (9), le système comprenant, dans un même boîtier (101) dont une sortie (103) est reliée à l'écran, au moins un circuit électronique de calcul (110) et un circuit électronique de surveillance (120), le circuit électronique de calcul (110) étant programmé pour traiter les informations critiques à afficher, construire au moins une image à partir des informations non critiques et y incorporer les informations critiques à afficher afin de former, sur une sortie (104.1) du circuit électronique de calcul (110), un signal image destiné à être transmis à l'écran ; le circuit électronique de surveillance (120) ayant une entrée (105.1) reliée à ladite sortie (104.1) du circuit électronique de calcul (110) et étant programmé pour déterminer des informations critiques attendues pour l'affichage et vérifier si le signal image contient des informations correspondant aux informations critiques attendues.

2. Système selon la revendication 1, dans lequel le circuit électronique de calcul (110) a au moins une entrée reliée à une source de mesures et le circuit électronique de surveillance (120) a une entrée reliée à ladite source de mesures, les informations critiques à afficher et les informations critiques attendues étant donc obtenues à partir de la même source de mesures.

3. Système selon la revendication 1 ou 2, dans lequel le circuit électronique de calcul (110) incorpore les informations critiques à afficher dans une première couche de détail fusionnée avec au moins une couche de détail d'arrière-plan pour former l'image à afficher.

4. Système selon la revendication 3, dans lequel le circuit électronique de surveillance (120) élabore une deuxième couche de détail dans laquelle les informations critiques attendues sont incorporées.

5. Système selon la revendication 4, dans lequel le circuit électronique de surveillance (120) utilise la deuxième couche de détail comme masque appliqué au signal image pour obtenir un signal résultat et vérifie que le signal résultat correspond à la deuxième couche de détail.

6. Système selon la revendication 3, dans lequel la première couche de détail est transmise au circuit électronique de surveillance (120).

7. Système selon la revendication 6, dans lequel le circuit électronique de surveillance (120) utilise la première couche de détail comme masque appliqué au signal image pour obtenir un signal résultat et vérifie si le signal résultat correspond à la première couche de détail.

8. Système selon la revendication 1, dans lequel le circuit électronique de calcul (110) transmet au circuit électronique de surveillance (120) les informations critiques à afficher et le circuit électronique de surveillance (120) considère lesdites informations critiques à afficher comme les informations critiques attendues et vérifie si les informations critiques attendues sont présentes dans le signal image.

9. Aéronef équipé d'au moins un écran (9) auquel est reliée la sortie (103) d'un système d'affichage (100) selon l'une quelconque des revendications précédentes.

## Patentansprüche

1. Anzeigesystem zum Anzeigen kritischer und nicht-kritischer Informationen auf einem Bildschirm (9), wobei das System zumindest eine elektronische Rechenschaltung (110) und eine elektronische Überwachungsschaltung (120) in ein und demselben Gehäuse (101) umfasst, das einen mit dem Bildschirm verbundenen Ausgang (103) aufweist, wobei die elektronische Rechenschaltung (110) dafür programmiert ist, die anzuzeigenden kritischen Informationen zu verarbeiten, aus den nicht-kritischen Informationen zumindest ein Bild zu konstruieren und die anzuzeigenden kritischen Informationen darin einzufügen, um an einem Ausgang (104.1) der elektronischen Rechenschaltung (110) ein an den Bildschirm zu übertragendes Bildsignal zu erzeugen; wobei die elektronische Überwachungsschaltung (120) einen mit dem Ausgang (104.1) der elektronischen Rechenschaltung (110) verbundenen Eingang (105.1) aufweist und dafür programmiert ist, erwartete kritische Informationen für die Anzeige zu bestimmen und zu prüfen, ob das Bildsignal Informationen enthält, die den erwarteten kritischen Informationen entsprechen.

2. System nach Anspruch 1, wobei die elektronische Rechenschaltung (110) zumindest einen mit einer Messdatenquelle verbundenen Eingang aufweist, und die elektronische Überwachungsschaltung (120) einen mit der Messdatenquelle verbundenen Eingang aufweist, wobei die anzuzeigenden kritischen Informationen und die erwarteten kritischen Informationen somit aus derselben Messdatenquelle gewonnen werden.

3. System nach Anspruch 1 oder 2, wobei die elektronische Rechenschaltung (110) die anzuzeigenden kritischen Informationen in eine mit zumindest einer Hintergrunddetailschicht zusammengeführte erste Detailschicht einfügt, um das anzuzeigende Bild zu bilden.

4. System nach Anspruch 3, wobei die elektronische Überwachungsschaltung (120) eine zweite Detailschicht erstellt, in welche die erwarteten kritischen Informationen eingefügt werden.

5. System nach Anspruch 4, wobei die elektronische Überwachungsschaltung (120) die zweite Detailschicht als eine auf das Bildsignal angewandte Maske verwendet, um ein Ergebnissignal zu erhalten, und prüft, ob das Ergebnissignal der zweiten Detailschicht entspricht.

6. System nach Anspruch 3, wobei die erste Detailschicht an die elektronische Überwachungsschaltung (120) übertragen wird.

7. System nach Anspruch 6, wobei die elektronische Überwachungsschaltung (120) die erste Detailschicht als eine auf das Bildsignal angewandte Maske verwendet, um ein Ergebnissignal zu erhalten, und prüft, ob das Ergebnissignal der ersten Detailschicht entspricht.

8. System nach Anspruch 1, wobei die elektronische Rechenschaltung (110) die anzuzeigenden kritischen Informationen an die elektronische Überwachungsschaltung (120) überträgt und die elektronische Überwachungsschaltung (120) die anzuzeigenden kritischen Informationen als die erwarteten kritischen Informationen betrachtet und prüft, ob die erwarteten kritischen Informationen in dem Bildsignal vorhanden sind.

9. Luftfahrzeug, ausgestattet mit zumindest einem Bildschirm (9), mit welchem der Ausgang (103) eines Anzeigesystems (100) nach einem der vorhergehenden Ansprüche verbunden ist.

## Claims

1. System for displaying critical and non-critical information on a screen (9), the system comprising, in one same housing (101), an output (103) of which is connected to the screen, at least one electronic computing circuit (110) and one electronic monitoring circuit (120), the electronic computing circuit (110) being programmed to process the critical information to be displayed, construct at least one image from the non-critical information and incorporate therein the critical information to be displayed in order to form, on an output (104.1) of the electronic computing circuit (110), an image signal intended to be transmitted to the screen; the electronic monitoring circuit (120) having an input (105.1) connected to said output (104.1) of the electronic computing circuit (110) and being programmed to determine the expected critical information for the display and verify whether the image signal contains information corresponding to the expected critical information.

2. System according to claim 1, wherein the electronic computing circuit (110) has at least one input connected to a measurement source and the electronic monitoring circuit (120) has an input connected to said measurement source, the critical information to be displayed and the expected critical information therefore being obtained from the same measurement source.

3. System according to claim 1 or 2, wherein the electronic computing circuit (110) incorporates the critical information to be displayed in a first detail layer combined with at least one background detail layer to form the image to be displayed.

4. System according to claim 3, wherein the electronic monitoring circuit (120) develops a second detail layer, wherein the expected critical information is incorporated.

5. System according to claim 4, wherein the electronic monitoring circuit (120) uses the second detail layer as a mask applied to the image signal to obtain a result signal and verifies that the result signal corresponds to the second detail layer.

6. System according to claim 3, wherein the first detail layer is transmitted to the electronic monitoring circuit (120).

7. System according to claim 6, wherein the electronic monitoring circuit (120) uses the first detail layer as a mask applied to the image signal to obtain a result signal and verifies whether the result signal corresponds to the first detail layer.

8. System according to claim 1, wherein the electronic computing circuit (110) transmits the critical information to be displayed to the electronic monitoring circuit (120), and the electronic monitoring circuit (120) considers said critical information to be displayed as the expected critical information and verifies whether the expected critical information is present in the image signal.

9. Aircraft equipped with at least one screen (9) to which the output (103) of a display system (100) is connected, according to any one of the preceding claims.
